# EUROPÄISCHE PATENTSCHRIFT

(11) **EP 2 938 475 B1**
(45) Veröffentlichungstag und Bekanntmachung des Hinweises auf die Patenterteilung: **27.02.2019**
(21) Anmeldenummer: 13831847.2
(22) Anmeldetag: 19.12.2013
(51) Int. Cl.: B29C 41/28, B23K 101/16, B29C 41/26, B29D 29/00

(54) **DICHTSYSTEM FÜR EIN BEWEGTES METALLBAND SOWIE BANDGIESSANLAGE MIT EINEM SOLCHEN DICHTSYSTEM**
SEALING SYSTEM FOR A MOVING METAL STRIP AND STRIP CASTING INSTALLATION COMPRISING SAID TYPE OF SEALING SYSTEM
SYSTÈME D'ÉTANCHÉITÉ DESTINÉ À UNE BANDE MÉTALLIQUE DÉFILANTE ET INSTALLATION DE COULÉE DE BANDES MINCES DOTÉE D'UN TEL SYSTÈME D'ÉTANCHÉITÉ

(30) Priorität: 27.12.2012 AT 506222012; 27.12.2012 US 201213727719
(43) Veröffentlichungstag der Anmeldung: 04.11.2015
(73) Patentinhaber: Berndorf Band GmbH, 2560 Berndorf (AT)
(72) Erfinder: KAGER, Franz, A-2320 Schwechat (AT)
(74) Vertreter: Burger, Hannes
(86) Internationale Anmeldenummer: PCT/AT2013/050257
(87) Internationale Veröffentlichungsnummer: WO 2014/100846

(56) Entgegenhaltungen:
- EP-B1- 0 056 540
- EP-B1- 0 163 820
- EP-B2- 0 128 282
- WO-A1-97/17490

## Beschreibung

Die Erfindung betrifft eine Anordnung mit einem bewegten Metallband, einem Hohlraum, welcher auf einer Seite durch das Metallband begrenzt ist, sowie mit einem Dichtsystem zwischen dem Metallband und wenigstens einer Begrenzungswand des Hohlraums, das im Randbereich des Metallbands angeordnet und parallel zu dessen Bewegungsrichtung ausgerichtet ist. Das Dichtsystem weist einen länglichen aufblasbaren flexiblen Körper auf, eine Halterung, in welcher der genannte aufblasbare Körper eingebettet ist, und einen länglichen Körper aus Teflon, welcher auf einer der Halterung abgewandten Seite des aufblasbaren flexiblen Körpers angeordnet ist und welcher das Metallband auf einer dem aufblasbaren Körper abgewandten Seite mit einer Dichtfläche berührt. Zudem betrifft die Erfindung eine Bandgießanlage mit einer Anordnung der genannten Art sowie einer Einrichtung zur Aufbringung eines Werkstoffs auf das Metallband.

Bewegte Metallbänder werden nach dem Stand der Technik beispielsweise für die Filmherstellung oder auch für die Herstellung von Kunststein ("Engineered Stone") eingesetzt. Dabei wird eine mehr oder minder flüssige beziehungsweise pastöse Masse auf das Metallband aufgetragen und entsprechend einem vorgegebenen Prozess zu einem Produkt verarbeitet. Problematisch ist dabei, dass insbesondere auf das Band aufgetragene flüssige oder staubförmige Massen seitlich vom Band herunter tropfen oder herunter fallen können, wenn diese nicht schnell genug zu einem hinreichend festen Film beziehungsweise einer hinreichend festen Platte umgewandelt werden beziehungsweise umgewandelt werden können. Materialverlust und Verschmutzung der Herstellungsanlage sind die Folge. Unter Umständen bedarf es auch eines hohen Aufwands, eine solcherart verschmutzte Herstellungsanlage zu reinigen und wieder in Betrieb zu setzen.

Eine Aufgabe der Erfindung ist es daher, das Heruntertropfen oder Herunterfallen eines auf das Metallband aufgetragenen Materials zu verringern oder nach Möglichkeit ganz zu vermeiden.

Die Aufgabe der Erfindung wird mit einer Anordnung der eingangs genannten Art gelöst, welche zusätzlich Dichtlippen zwischen dem Metallband und wenigstens einer Begrenzungswand des Hohlraums aus Gummi oder Silikon aufweist, welche quer zu einer Bewegungsrichtung des Metallbands ausgerichtet sind.

Schließlich wird die Aufgabe wird auch mit einer Bandgießanlage gelöst, umfassend eine Anordnung der oben genannten Art sowie eine Einrichtung zur Aufbringung eines Werkstoffs auf das Metallband.

Durch die vorgeschlagenen Maßnahmen wird eine wirkungsvolle Abdichtung des Metallbands erzielt. Einerseits kann der Teflonkörper mit Hilfe des aufblasbaren Körpers gegen das Metallband gedrückt werden, wodurch zwischen Teflonkörper und Metallband eine Abdichtung entsteht, andererseits ist die Reibung durch die vorgenommene Materialwahl trotz der Abdichtung gering, sodass weder auf den Teflonkörper noch auf das Metallband übermäßige Kräfte aufgebracht werden. In Folge kann auch eine Antriebsleistung für das Metallband klein gehalten werden. Durch Variation des Drucks im aufblasbaren Körper kann überdies auf einfache Weise eine gewünschte Anpresskraft eingestellt werden. Die Dichtung mit Hilfe des Dichtsystems kann beispielsweise flüssigkeitsdicht ausgeführt sein, sie kann aber beispielsweise auch gasdicht ausgeführt sein.

Zudem kann verhindert werden, dass auf das Metallband aufgebrachte Stoffe, im Speziellen Flüssigkeiten und pulverförmige Stoffe, während der Bewegung des Metallbands von diesem herablaufen. Durch die Abstreifwirkung der genannten Dichtlippen kann ebenfalls eine gute Dichtwirkung erzielt werden.

Durch die vorgeschlagenen Maßnahmen wird auch ein Hohlraum realisiert, von dem eine Begrenzungsfläche durch das Metallband gebildet und damit bewegt ist. In diesem Hohlraum können zum Beispiel Gase oder Flüssigkeiten eingebracht werden, welche das Band selbst und/oder einen auf das Metallband aufgebrachten Stoff beeinflussen. Denkbar wäre etwa, dass ein auf das Metallband aufgebrachter Stoff durch ein im besagten Hohlraum befindliches Gas gehärtet wird. Möglich ist aber beispielsweise auch, dass sich in einem solchen Hohlraum Wasser, insbesondere Warmwasser, befindet.

Weitere vorteilhafte Ausgestaltungen und Weiterbildungen der Erfindung ergeben sich aus den Unteransprüchen sowie aus der Beschreibung in Zusammenschau mit den Figuren.

Vorteilhaft ist es, wenn das Dichtsystem ein mit dem aufblasbaren Körper verbundenes Druckluftversorgungssystem umfasst, welches dazu eingerichtet ist, den aufblasbaren Körper im Betrieb mit im Wesentlichen konstantem Druck zu beaufschlagen. Auf diese Weise wird der Teflonkörper mit konstanter Kraft auf das Metallband gedrückt, wodurch reproduzierbare Ergebnisse hinsichtlich der Dichtheit und auch hinsichtlich einer auf das Metallband wirkenden, für eine Bewegung desselben notwendigen, Zugkraft erzielt. Dies gilt auch bei Abnutzung der Teflonkörper, da zwar der Druck im aufblasbaren Körper konstant ist, das Volumen in demselben aber variabel sein kann. Bei zunehmender Abnutzung des Teflonkörpers steigt das Volumen im aufblasbaren Körper dementsprechend, sodass der Teflonkörper mit seiner Dichtfläche stets auf dem Metallband aufliegt.

Günstig ist es weiterhin, wenn der Teflonkörper aus mehreren Einzelteilen gebildet ist, welche mit Hilfe einer Überblattung, insbesondere mit einer Hakenblattung, einer Nut-Feder-Verbindung oder mit Hilfe einer Schwalbenschwanzverbindung stabförmig miteinander verbunden sind. Dadurch können mehrere Einzelstäbe leicht zu einem längeren Stab zusammengefügt werden. Vorteilhaft sind dabei insbesondere formschlüssige Verbindungen wie zum Beispiel die Hakenblattung oder die Schwalbenschwanzverbindung, da Teflon nur schwer verklebt werden kann.

Günstig ist es auch, wenn der Teflonkörper aus mehreren Einzelteilen gebildet ist, welche miteinander verschweißt sind. Auf diese Weise können mehrere Einzelstäbe nahtlos zu einem längeren Stab zusammengefügt werden. Damit können Dichtheitsprobleme, wie sie bei anderen Fügeverfahren entstehen können, leicht vermieden werden.

Vorteilhaft ist es, wenn der Teflonkörper in der Halterung für den aufblasbaren Körper verschiebbar geführt ist. Dadurch können einerseits Unebenheiten, andererseits aber auch Abrieb gut ausgeglichen werden, da sich der Teflonkörper sowohl auf das Metallband zu, als auch von diesem weg bewegen kann. Darüber hinaus kann eine Befestigung des Teflonkörpers auf dem aufblasbaren Körper, welche unter Umständen nur schwierig zu bewerkstelligen ist, entfallen. Neben der Dichtfläche zwischen dem Teflonkörper und dem Metallband entsteht dann zwischen dem Teflonkörper und dem aufblasbaren Körper eine weitere Dichtfläche.

In einer günstigen Ausführungsform des Dichtsystems ist die Halterung durch ein U-Profil gebildet. Dadurch kann die Halterung leicht hergestellt werden, beispielsweise aus einem Metallprofil oder einem umgekanteten Blech.

Günstig ist es zudem, wenn der Teflonkörper einen rechteckförmigen Querschnitt aufweist. Dadurch kann der Teflonkörper leicht hergestellt werden und verfügt darüber hinaus über eine ebene Dichtfläche.

Eine besonders vorteilhafte Anordnung erhält man, wenn Dichtsysteme einander gegenüberliegend auf einer Oberseite und einer Unterseite des Metallbands angeordnet sind. Dadurch kann vermieden werden, dass sich das Metallband bei Druckbeaufschlagung des aufblasbaren Körpers von diesem weg biegt und somit eine Dichtung erschwert wird.

Günstig ist es dabei, wenn die einander gegenüberliegend angeordneten Dichtsysteme dicht miteinander verbunden sind. Auf diese Weise können ein Raum oberhalb des Metallbands und ein Raum unterhalb des Metallbands dicht miteinander verbunden werden.

Vorteilhaft ist es, wenn beide einander gegenüberliegend angeordneten Dichtsysteme über einen aufblasbaren Körper verfügen. Dadurch können Unebenheiten aber im Speziellen auch

Abrieb der Teflonkörper gut ausgeglichen werden, ohne dass das Metallband dazu verformt werden müsste.

Vorteilhaft ist es schließlich auch, wenn nur eines der beiden einander gegenüberliegend angeordneten Dichtsysteme über einen aufblasbaren Körper verfügt. Dadurch ergibt sich ein einfacher Aufbau der Anordnung.

Zum besseren Verständnis der Erfindung wird diese anhand der nachfolgenden Figuren näher erläutert. Es zeigen:
- Fig. 1: ein erstes schematisch dargestelltes Beispiel für eine Anordnung mit einem Dichtsystem und einem bewegten Metallband im Querschnitt;
- Fig. 2: wie Fig. 1, nur dass lediglich ein Dichtsystem mit einem aufblasbaren Körper ausgestattet ist;
- Fig. 3: eine schematisch dargestellte Anordnung mit einem Dichtsystem und einem bewegten Metallband in Seitenansicht;
- Fig. 4: die in Fig. 3 dargestellte Anordnung in Draufsicht;
- Fig. 5: einen Teflonkörper, dessen Einzelteile durch eine Hakenblattung stabförmig miteinander verbunden sind, in Seitenansicht;
- Fig. 6: den Teflonkörper aus Fig. 5 in Draufsicht;
- Fig. 7: einen Teflonkörper, dessen Einzelteile durch eine einfache Überblattung stabförmig miteinander verbunden sind, in Draufsicht;
- Fig. 8: einen Teflonkörper, dessen Einzelteile durch eine Nut-Feder-Verbindung stabförmig miteinander verbunden sind, in Draufsicht;
- Fig. 9: einen Teflonkörper, dessen Einzelteile durch eine Schwalbenschwanzverbindung stabförmig miteinander verbunden sind, in Draufsicht;
- Fig. 10: eine beispielhafte Mehrlippendichtung in Unteransicht;
- Fig. 11: die Mehrlippendichtung aus Fig. 10 im Schnitt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

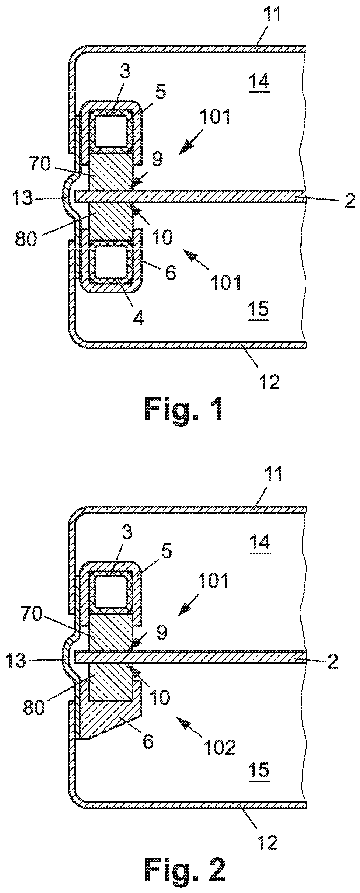

Fig. 1 zeigt ein erstes schematisch dargestelltes Beispiel für eine Anordnung mit zwei Dichtsystemen 101 und einem bewegten Metallband 2 im Querschnitt. Die Dichtsysteme 101 umfassen je zwei längliche aufblasbare flexible Körper 3, 4, Halterungen 5, 6, in welche die genannten aufblasbaren Körper 3, 4 eingebettet sind, und längliche Körper 70, 80 aus Teflon, welcher auf den Halterungen 5, 6 abgewandten Seiten der aufblasbaren flexiblen Körper 3, 4 angeordnet sind. Die Teflonkörper 70, 80 weisen auf einer dem aufblasbaren Körper 3, 4 abgewandten Seite respektive auf einer dem Metallband 2 zugewandten Seite zudem Dichtflächen 9, 10 auf.

Im vorliegenden Beispiel sind die Teflonkörper 70, 80 in den Halterungen 5, 6 für die aufblasbaren Körper 3, 4 verschiebbar geführt. Prinzipiell ist es daher möglich, dass die Teflonkörper 70, 80 auf den aufblasbaren Körpern 3, 4 lediglich aufliegen. Eine Befestigung der Teflonkörper 70, 80 auf den aufblasbaren Körpern 3, 4 ist in diesem Fall nicht zwingend nötig. Selbstverständlich ist aber auch denkbar, dass die Teflonkörper 70, 80 auf dem aufblasbaren Körper 3, 4 befestigt sind. Eine Führung der Teflonkörper 70, 80 kann dann gegebenenfalls entfallen.

Durch die mögliche Bewegung der Teflonkörper 70, 80 in den Halterungen 5, 6 können Unebenheiten sowie auch Abrieb der Teflonkörper 70, 80 gut ausgeglichen werden. Mit zunehmendem Abrieb werden die Teflonkörper 70, 80 weiter aus den Halterungen 5, 6 herausgedrückt.

Im vorliegenden Beispiel sind die Halterungen 5, 6 durch ein U-Profil gebildet. Dadurch können die Halterungen 5, 6 leicht hergestellt werden, beispielsweise aus einem Metallprofil oder einem umgekanteten Blech. Selbstverständlich können die Halterungen aber auch aus Vollmaterial hergestellt sein (vergleiche Fig. 2).

Weiterhin weisen die Teflonkörper 70, 80 im vorliegenden Beispiel einen rechteckförmigen Querschnitt auf. Dadurch können auch die Teflonkörper 70, 80 leicht hergestellt werden und verfügen darüber hinaus über ebene Dichtflächen 9, 10.

In der in Fig. 1 dargestellten Anordnung sind die zwei Dichtsysteme 101 einander gegenüberliegend auf einer Oberseite und einer Unterseite des Metallbands 2 angeordnet. Dadurch kann vermieden werden, dass sich das Metallband 2 bei Druckbeaufschlagung der aufblasbaren Körper 3, 4 von diesem weg biegt und somit eine Dichtung erschwert wird (vergleiche dazu auch Fig. 2). Unterstützt wird dies dadurch, dass beide einander gegenüberliegend angeordneten Dichtsysteme 101 über aufblasbare Körper 3, 4 verfügen.

In der in Fig. 1 dargestellten Anordnung sind die einander gegenüberliegend angeordneten Dichtsysteme 101 mit Hilfe der Brücke 13 dicht miteinander verbunden. Auf diese Weise können ein Raum 14 oberhalb des Metallbands 2, welcher durch die obere Haube 11 gebildet ist, und ein Raum 15 unterhalb des Metallbands 2, welcher durch die untere Haube 12 gebildet ist, dicht miteinander verbunden werden. Selbstverständlich wäre es aber auch möglich, die Brücke 13 wegzulassen und demzufolge nur einen oberen Raum 14, nur einen unteren Raum 15 oder getrennte Räume 14 und 15 vorzusehen.

Generell kann die mit Hilfe des Dichtsystems 101 erzielte Dichtung beispielsweise flüssigkeitsdicht oder zum Beispiel auch gasdicht ausgeführt sein.

Fig. 2 zeigt nun ein zweites schematisch dargestelltes Beispiel für eine Anordnung mit einem Dichtsystem 101 und einem Dichtsystem 102 sowie einem bewegten Metallband 2 im Querschnitt, welche der in Fig. 1 dargestellten Anordnung sehr ähnlich ist. Im Unterschied dazu ist aber nur das obere Dichtsystem 101 mit einem aufblasbaren Körper 3 ausgestattet, das untere Dichtsystem 102 weist dagegen keinen aufblasbaren Körper auf. Dadurch ergibt sich ein vergleichsweise einfacher Aufbau der Anordnung.

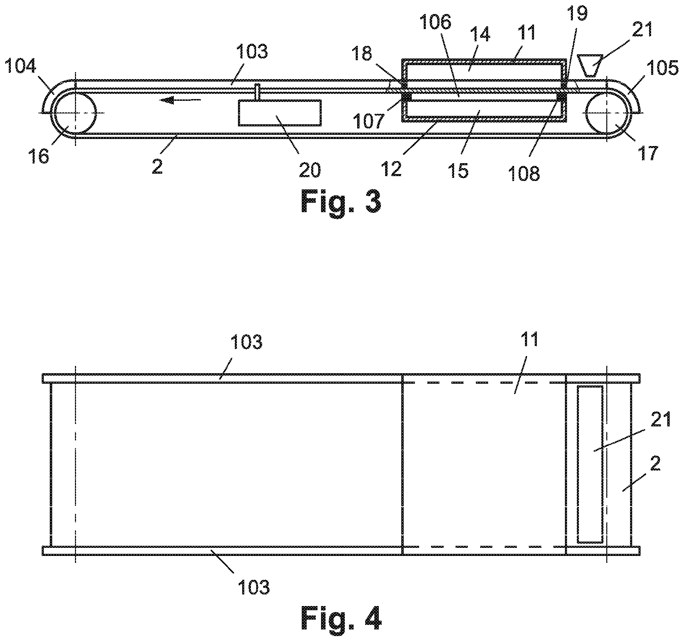

Fig. 3 zeigt nun ein weiteres schematisch dargestelltes Beispiel für eine Anordnung mit Dichtsystemen 103..108 und einem bewegten Metallband 2 in Seitenansicht beziehungsweise teilweise im Schnitt. Die Fig. 4 zeigt dieselbe Anordnung in Draufsicht.

Die gezeigte Anordnung umfasst im Randbereich des Metallbands 2 angeordnete und parallel zu dessen Bewegungsrichtung ausgerichtete Dichtsysteme 103..106. Das Dichtsystem 103 befindet sich dabei auf dem Obertrum des Metallbands 2, die Dichtsysteme 104 und 105 sind im Bereich der Umlenkrollen 16 und 17 angeordnet und das Dichtsystem 106 ist am Untertrum des Metallbands 2, gegenüberliegend zum Dichtsystem 103, angeordnet. Durch die gewählte Anordnung kann insbesondere verhindert werden, dass auf das Metallband 2 aufgebrachte Stoffe, im Speziellen Flüssigkeiten und pulverförmige Stoffe, während der Bewegung des Metallbands 2 von diesem herablaufen oder herabfallen.

Darüber hinaus umfasst die in den Figuren 3 und 4 Anordnung quer zur Bewegungsrichtung des Metallbands 2 und dessen Breite umspannende Dichtsysteme 107, 108. Dadurch wird ein Hohlraum 15 ausgebildet, welcher auf einer Seite durch das Metallband 2 begrenzt ist, wobei zwischen dem Metallband 2 und der Begrenzungswand 12 des Hohlraums 15 Dichtsysteme 106..108 angeordnet sind.

An der Oberseite des Metallbands 2 befindet sich ein weiterer Hohlraum 14 welcher im Wesentlichen durch das Metallband 2 und die obere Haube 11 gebildet ist. Im Randbereich des Metallbands 2 ist der Hohlraum 14 mit Hilfe von Dichtsystemen 103 und quer dazu mit Dichtlippen 18, 19 aus Gummi oder Silikon abgedichtet ist.

In diesen Hohlräumen 14, 15 können zum Beispiel Gase oder Flüssigkeiten eingebracht werden, welche das Metallband 2 selbst und/oder auf das Metallband 2 aufgebrachte Stoffe beeinflussen. Denkbar wäre etwa, dass ein auf dem Metallband 2 befindlicher Stoff durch ein Gas im Hohlraum 14 gehärtet wird. Denkbar wäre weiterhin, dass sich im Hohlraum 15 Wasser, insbesondere Warmwasser, oder auch Dampf zum Beheizen des Metallbands 2 befindet. Beispielsweise können in dem Hohlraum 15 auch auf das Metallband 2 gerichtete Sprühdüsen angeordnet sein, welche Warmwasser auf das Metallband 2 sprühen. In dem Hohlraum 15 kann überdiese rückfließendes Warmwasser gesammelt werden. Denkbar wäre letztlich auch, dass sich im Hohlraum 14 eine Reinigungseinrichtung für das Metallband 2 befindet. Diese kann beispielsweise Hochdruck-Sprühdüsen und eine Reinigungsbürste umfassen

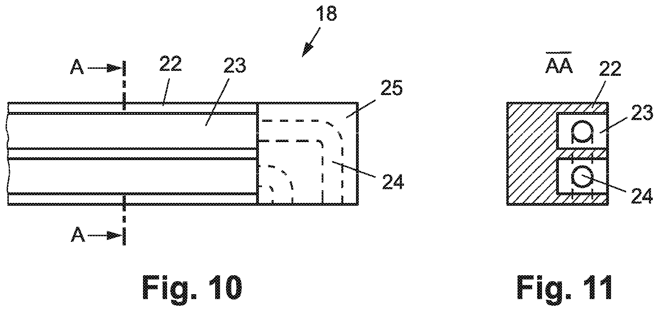

Die Wahl der quer zur Bewegungsrichtung des Metallbands 2 vorgesehenen Dichtsysteme 18, 19 für den oberen Hohlraum 14 und der Dichtsysteme 107, 108 für den unteren Hohlraum 15 ist rein beispielhaft zu sehen. Selbstverständlich kann das Dichtsystem 107, 108 auch für den oberen Hohlraum 15 eingesetzt werden. Gleichermaßen können die Dichtlippen 18, 19 aus Gummi oder Silikon auch für den unteren Hohlraum 15 oder auch beide Hohlräume 14 und 15 eingesetzt werden. Vorteilhaft können für den genannten Zweck auch Mehrlippendichtungen eingesetzt werden (siehe dazu Fig. 10 und 11).

In der Fig. 3 ist schließlich noch eine Einrichtung zur Aufbringung eines Werkstoffs in Form eines Trichters 21 dargestellt. Mit Hilfe dieses Trichters 21 kann der Werkstoff auf das Metallband 2 aufgebracht werden, welcher beispielsweise für die Herstellung eines Films oder eines Kunststeins benötigt. wird.

Ein weiteres Merkmal der in den Figuren 3 und 4 dargestellten Anordnung ist, dass die Dichtsysteme 103..108, konkret deren aufblasbaren Körper 3, 4, mit einem Druckluftversorgungssystem 20 verbunden sind, welches dazu eingerichtet ist, die aufblasbaren Körper 3, 4 im Betrieb mit im Wesentlichen konstantem Druck zu beaufschlagen. Auf diese Weise werden die Teflonkörper 70, 80 mit konstanter Kraft auf das Metallband 2 gedrückt, wodurch reproduzierbare Ergebnisse hinsichtlich der Dichtheit und auch hinsichtlich einer auf das Metallband 2 wirkenden und für eine Bewegung notwendigen Zugkraft erzielt. Dies gilt auch bei Abnutzung der Teflonkörper 70, 80, da zwar der Druck in den aufblasbaren Körpern 3, 4 konstant ist, das Volumen in denselben aber variabel sein kann. Bei zunehmender Abnutzung der Teflonkörper 70, 80 steigt das Volumen in den aufblasbaren Körpern 3, 4, sodass der Teflonkörper 70, 80 mit den Dichtflächen 9, 10 stets auf dem Metallband 2 aufliegt.

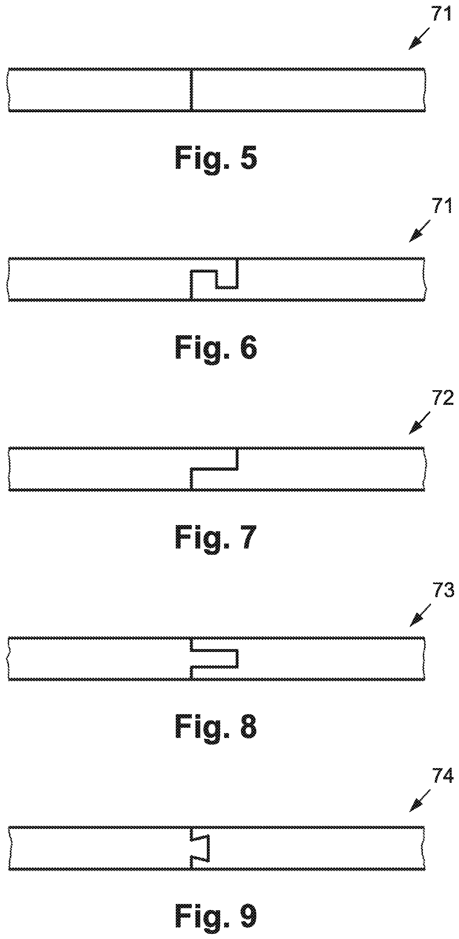

Je nach Länge/Breite des Metallbands 2 respektive deren Dichtsysteme 101..108 kann es erforderlich sein, die Teflonkörper 70, 80 aus mehreren Einzelteilen zu bilden. Die Figuren 5 und 6 zeigen dazu einen Teflonkörper 71, der aus mehreren Einzelteilen gebildet ist, welche mit Hilfe einer Hakenblattung stabförmig miteinander verbunden sind. Die Fig. 5 zeigt den Teflonkörper 71 dabei in Seitenansicht, die Fig. 6 in Draufsicht. Durch die gewählte Verbindung werden die Einzelteile nicht nur miteinander verbunden, sondern es wird auch eine Art Labyrinthdichtung gebildet.

Fig. 7 zeigt einen Teflonkörper 72, der aus mehreren Einzelteilen gebildet ist, welche mit Hilfe einer Überblattung stabförmig miteinander verbunden sind.

Fig. 8 zeigt einen Teflonkörper 73, der aus mehreren Einzelteilen gebildet ist, welche mit Hilfe einer Nut-Feder-Verbindung stabförmig miteinander verbunden sind. In der Fig. 8 ist die Feder direkt in einen der Einzelzeile eingearbeitet, denkbar wäre aber auch die Verwendung einer fremden Feder.

Fig. 9 zeigt schließlich einen Teflonkörper 74, der aus mehreren Einzelteilen gebildet ist, welche mit Hilfe einer Schwalbenschwanzverbindung stabförmig miteinander verbunden sind.

Generell können durch die in den Figuren 5 bis 9 dargestellten Verbindungsarten mehrere Einzelstäbe leicht zu einem längeren Stab zusammengefügt werden. Vorteilhaft sind dabei insbesondere formschlüssige Verbindungen wie zum Beispiel die Hakenblattung (Figuren. 5 und 6) oder die Schwalbenschwanzverbindung (Fig. 9), da Teflon nur schwer verklebt werden kann.

Alternativ oder zusätzlich zu den dargestellten Verbindungsmöglichkeiten ist es denkbar, dass ein Teflonkörper 70..74, 80 aus mehreren Einzelteilen gebildet ist, welche miteinander verschweißt sind. Auf diese Weise können mehrere Einzelstäbe nahtlos zu einem längeren Stab zusammengefügt werden. Damit können eventuelle Dichtheitsprobleme noch besser vermieden werden.

Die Figuren 10 und 11 zeigen nun, wie die Dichtungen 18 und 19 ausgeführt sein könnten. Exemplarisch wird die Dichtung 18 dargestellt und zwar in Fig. 10 in Unteransicht und in Fig. 11 im Schnitt AA. Hohlräume 23 zwischen den Lippen 22 der Mehrlippendichtung 18 sind in diesem Beispiel mit je einem Ablauf 24 verbunden, welcher in einem Randstück 25 der Mehrlippendichtung 18 angeordnet ist. Durch diese Maßnahmen kann eine besonders gute Trocknung des Metallbands 2 erzielt werden, da sich vor den in Bewegungsrichtung des Metallbands 2 nachgeordneten Lippen 22 langfristig keine Flüssigkeit aufstauen kann. Das Metallband 2 wird somit bei Passieren der einzelnen Lippen 22 sukzessive trockener. Die Mehrlippendichtung 18 kann einstückig ausgeführt sein, oder aber auch aus mehreren Teilen bestehen. Beispielsweise kann das Randstück 25 als gesonderter Teil vorliegen. Denkbar wäre auch, dass einzelne Dichtlippen 22 in einen Grundkörper eingesteckt werden.

In den Figuren 10 bis 11 wird somit eine Anordnung gezeigt, die eine quer zur Bewegungsrichtung des Metallbands 2 angeordnete Mehrlippendichtung 18 umfasst, welche insbesondere einer Einrichtung zum Auftragen einer Flüssigkeit auf das Metallband 2 (z.B. Sprühdüsen im Hohlraum 15) in der Hauptbewegungsrichtung des Metallbands 2 nachgelagert ist, wobei Hohlräume 23 zwischen den Lippen 22 der Mehrlippendichtung 18 mit einem Ablauf 24 verbunden sind.

Die Ausführungsbeispiele zeigen mögliche Ausführungsvarianten einer erfindungsgemäßen Anordnung/Bandgießanlage mit einem Metallband 2 und einem Dichtsystem 101.. 108, wobei auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Insbesondere wird festgehalten, dass die dargestellten Dichtsysteme 101..108 beziehungsweise Anordnungen in der Realität auch mehr oder weniger Bestandteile als dargestellt umfassen können.

Der Ordnung halber sei abschließend darauf hingewiesen, dass die Dichtsysteme 101.. 108 und/oder Anordnungen, sowie deren Bestandteile zum besseren Verständnis ihres Aufbaus teilweise unmaßstäblich und/oder vergrößert und/oder verkleinert dargestellt wurden.

### Bezugszeichenaufstellung

- 101..108: Dichtsystem
- 2: Metallband
- 3: aufblasbarer flexibler Körper
- 4: aufblasbarer flexibler Körper
- 5: Halterung

- 6: Halterung
- 70..74: Teflonkörper
- 80: Teflonkörper
- 9: Dichtfläche
- 10: Dichtfläche

- 11: obere Haube
- 12: untere Haube
- 13: Brücke
- 14: oberer Hohlraum
- 15: unterer Hohlraum

- 16: Umlenkrolle
- 17: Umlenkrolle
- 18: Dichtlippe
- 19: Dichtlippe
- 20: Druckluftversorgungssystem

- 21: Einrichtung zur Aufbringung eines Werkstoffs (Trichter)
- 22: Dichtlippe
- 23: Hohlraum
- 24: Ablauf
- 25: Randstück

## Patentansprüche

1. Anordnung, umfassend
- ein bewegtes Metallband (2),
- einen Hohlraum (14, 15), welcher auf einer Seite durch das Metallband (2) begrenzt ist,
- ein Dichtsystem (101..108) zwischen dem Metallband (2) und wenigstens einer Begrenzungswand (11, 12) des Hohlraums (14, 15), das im Randbereich des Metallbands (2) angeordnet und parallel zu dessen Bewegungsrichtung ausgerichtet ist, wobei das Dichtsystem (101..108)
- einen länglichen aufblasbaren flexiblen Körper (3, 4) aufweist,
- eine Halterung (5, 6), in welcher der genannte aufblasbare Körper (3, 4) eingebettet ist, und
- einen länglichen Körper (70..74, 80) aus Teflon, welcher auf einer der Halterung (5, 6) abgewandten Seite des aufblasbaren flexiblen Körpers (3, 4) angeordnet ist und welcher das Metallband (2) auf einer dem aufblasbaren Körper (3, 4) abgewandten Seite mit einer Dichtfläche (9, 10) berührt,
**gekennzeichnet durch**
- Dichtlippen (18, 19) zwischen dem Metallband (2) und wenigstens einer Begrenzungswand (11, 12) des Hohlraums aus Gummi oder Silikon, welche quer zu einer Bewegungsrichtung des Metallbands (2) ausgerichtet sind.

2. Anordnung nach Anspruch 1, **gekennzeichnet durch** ein mit dem aufblasbaren Körper (3, 4) verbundenes Druckluftversorgungssystem (17), welches dazu eingerichtet ist, den aufblasbaren Körper (3, 4) im Betrieb mit im Wesentlichen konstantem Druck zu beaufschlagen.

3. Anordnung nach Anspruch 1 oder 2, **dadurch gekennzeichnet, dass** der Teflonkörper (70..74, 80) aus mehreren Einzelteilen gebildet ist, welche zusammengesteckt und/oder miteinander verschweißt sind.

4. Anordnung nach einem der Ansprüche 1 bis 3, **dadurch gekennzeichnet, dass** der Teflonkörper (70..74, 80) in der Halterung (5, 6) für den aufblasbaren Körper (3, 4) verschiebbar geführt ist.

5. Anordnung nach einem der Ansprüche 1 bis 4, **dadurch gekennzeichnet, dass** die Halterung (5, 6) durch ein U-Profil gebildet ist.

6. Anordnung nach einem der Ansprüche 1 bis 5, **dadurch gekennzeichnet, dass** Dichtsysteme (103, 106) einander gegenüberliegend auf einer Oberseite und einer Unterseite des Metallbands (2) angeordnet sind.

7. Anordnung nach Anspruch 6, **dadurch gekennzeichnet, dass** die einander gegenüberliegend angeordneten Dichtsysteme (103, 106) dicht miteinander verbunden sind.

8. Anordnung nach Anspruch 6 oder 7, **dadurch gekennzeichnet, dass** beide einander gegenüberliegend angeordneten Dichtsysteme (103, 106) über einen aufblasbaren Körper (3, 4) verfügen.

9. Anordnung nach Anspruch 6 oder 7, **dadurch gekennzeichnet, dass** nur eines der beiden einander gegenüberliegend angeordneten Dichtsysteme (103, 106) über einen aufblasbaren Körper (3, 4) verfügt.

10. Bandgießanlage umfassend eine Anordnung nach einem der Ansprüche 1 bis 9 sowie eine Einrichtung zur Aufbringung eines Werkstoffs auf das Metallband (1).

## Claims

1. An arrangement comprising
- a moving metal strip (2),
- a cavity (14, 15) which is delimited on one side by the metal strip (2),
- a sealing system (101...108) between the metal strip (2) and at least one delimiting wall (11, 12) of the cavity (14, 15) which is arranged in the peripheral region of the metal strip (2) and is oriented parallel to the movement direction thereof, wherein the sealing system (101...108) comprises
- an elongate, inflatable, flexible body (3, 4),
- a holder (5, 6) in which the aforementioned inflatable body (3, 4) is embedded and
- an elongate body (70...74, 80) made of Teflon which is arranged on a side of the inflatable flexible body (3, 4) facing away from the holder (5, 6) and which is in contact with the metal strip (2) on a side facing away from the inflatable body (3, 4) with a sealing face (9, 10),
**characterized by**
- sealing lips (18, 19) between the metal strip (2) and at least one delimiting wall (11, 12) of the cavity made of rubber or silicone which are oriented transversely to a movement direction of the metal strip (2).

2. The arrangement according to claim 1, **characterized by** a compressed air supply system (17) connected to the inflatable body (3, 4) which is set up to apply a substantially constant pressure to the inflatable body (3, 4) during operation.

3. The arrangement according to claim 1 or 2, **characterized in that** the Teflon body (70...74, 80) is formed from a plurality of components which are fitted together and/or bonded to one another.

4. The arrangement according to one of claims 1 to 3, **characterized in that** the Teflon body (70...74, 80) is guided displaceably in the holder (5, 6) for the inflatable body (3, 4).

5. The arrangement according to one of claims 1 to 4, **characterized in that** the mount (5, 6) is formed by a U-profile.

6. The arrangement according to one of claims 1 to 5, **characterized in that** sealing systems (103, 106) are arranged opposite one another on an upper side and a lower side of the metal strip (2).

7. The arrangement according to claim 6, **characterized in that** the sealing systems (103, 106) arranged opposite one another are tightly connected to one another.

8. The arrangement according to claim 6 or 7, **characterized in that** both sealing systems (103, 106) arranged opposite one another have an inflatable body (3, 4).

9. The arrangement according to claim 6 or 7, **characterized in that** only one of the two sealing systems (103, 106) arranged opposite one another has an inflatable body (3, 4).

10. A strip casting system comprising an arrangement according to one of claims 1 to 9 and also a device for applying a material to the metal strip (1).

## Revendications

1. Dispositif comprenant
- une bande métallique mobile (2),
- une cavité (14, 15) qui est délimitée sur un côté par la bande métallique (2),
- un système d'étanchéité (101..108) entre la bande métallique (2) et au moins une paroi de délimitation (11, 12) de la cavité (14, 15), qui est disposé au niveau du bord de la bande métallique (2) et qui est orienté parallèlement à sa direction de déplacement, le système d'étanchéité (101.. 108)
- comprenant un corps flexible allongé gonflable (3, 4),
- un support (5, 6) dans lequel le corps gonflable (3, 4) mentionné est inséré et
- un corps allongé (70..74, 80) en téflon, qui est disposé sur un côté du corps flexible gonflable (3, 4) opposé au support (5, 6) et qui touche la bande métallique (2) sur un côté opposé au corps gonflable (3, 4) avec une surface d'étanchéité (9, 10),
**caractérisé par**
- des lèvres d'étanchéité (18, 19) entre la bande métallique (2) et au moins une paroi de délimitation (11, 12) de la cavité en caoutchouc ou en silicone, qui sont orientées transversalement par rapport à une direction de déplacement de la bande métallique (2).

2. Dispositif selon la revendication 1, **caractérisé par** un système d'alimentation en air comprimé (17) relié avec le corps gonflable (3, 4), qui est conçu pour alimenter le corps gonflable (3, 4) lors du fonctionnement avec une pression globalement constante.

3. Dispositif selon la revendication 1 ou 2, **caractérisé en ce que** le corps en téflon (70..74, 80) est constitué de plusieurs détails qui sont emboîtés et/ou soudés entre eux.

4. Dispositif selon l'une des revendications 1 à 3, **caractérisé en ce que** le corps en téflon (70..74, 80) est guidé de manière coulissante dans le support (5, 6) pour le corps gonflable (3, 4).

5. Dispositif selon l'une des revendications 1 à 4, **caractérisé en ce que** le support (5, 6) est constitué d'un profilé en U.

6. Dispositif selon l'une des revendications 1 à 5, **caractérisé en ce que** des systèmes d'étanchéité (103, 106) sont disposés de manière superposés entre eux sur un côté supérieur et un côté inférieur de la bande métallique (2).

7. Dispositif selon la revendication 6, **caractérisé en ce que** les systèmes d'étanchéité (103, 106) disposés de manière superposés entre eux sont reliés de manière étanche entre eux.

8. Dispositif selon la revendication 6 ou 7, **caractérisé en ce que** les deux systèmes d'étanchéité (103, 106) disposés de manière superposés entre eux disposent d'un corps gonflable (3, 4).

9. Dispositif selon la revendication 6 ou 7, **caractérisé en ce qu'**un seul des deux systèmes d'étanchéité (103, 106) disposés de manière superposés entre eux dispose d'un corps gonflable (3, 4).

10. Installation de moulage de bande comprenant un dispositif selon l'une des revendications 1 à 9 ainsi qu'un dispositif pour l'application d'un matériau sur la bande métallique (1).
